# FASCICULE DE BREVET EUROPEEN

(11) **EP 2 952 804 B1**
(45) Date de publication et mention de la délivrance du brevet: **24.05.2023**
(21) Numéro de dépôt: 15169651.5
(22) Date de dépôt: 28.05.2015
(51) Int. Cl.: G02B 7/02, F21S 41/147, F21S 41/29

(54) **MODULE LUMINEUX POUR VÉHICULE ET PROCÉDÉ DE FIXATION**
LEUCHTMODUL FÜR FAHRZEUG UND BEFESTIGUNGSVERFAHREN
LIGHTING MODULE FOR VEHICLE AND FASTENING METHOD

(30) Priorité: 03.06.2014 FR 1455034
(43) Date de publication de la demande: 09.12.2015
(73) Titulaire: VALEO VISION, 93012 Bobigny Cedex (FR)
(72) Inventeur: Lopez, Philippe, 49125 Tiercé (FR); Flatres, Jean-Marie, 49100 Angers (FR)
(74) Mandataire: Valeo Visibility

(56) Documents cités:
- EP-A2- 1 916 470
- EP-A2- 2 226 555
- DE-A1- 10 149 682
- DE-U1-202012 104 066
- FR-A1- 2 558 424
- FR-A1- 2 944 504
- FR-A1- 3 012 575
- JP-A- 2002 231 017
- JP-A- 2014 038 712
- JP-U- S6 160 401

## Description

L'invention concerne un module lumineux pour véhicule et un procédé de fixation d'une lentille dans un module lumineux pour véhicule.

Des moyens de fixation d'un élément optique dans un phare pour véhicule sont connus de FR 2 558 424 A1.

Dans un véhicule automobile, des diodes électro-luminescentes ou LED sont utilisées pour assurer l'éclairage par les feux de route, aussi bien l'éclairage nocturne que l'éclairage diurne, limité, d'identification. A cet effet, un module lumineux comprend essentiellement une LED, un réflecteur situé en arrière de la LED et renvoyant la lumière vers l'avant, et à l'avant du module, une lentille définissant l'ouverture du faisceau lumineux. Dans les modules lumineux existants, la lentille est sertie dans une monture annulaire elle-même fixée dans un cadre de support. La mise en place de la lentille et sa fixation dans le module lumineux nécessitent la mise en oeuvre de vis au cours d'opérations manuelles longues et délicates.

L'un des buts de l'invention est de proposer un dispositif de fixation d'une lentille de module lumineux de véhicule qui ne mette pas en oeuvre de vis et ne présente pas les inconvénients précités.

Un autre but de l'invention est de proposer un procédé de fixation de la lentille d'un module lumineux de véhicule particulièrement simple et rapide.

Un module lumineux suivant l'invention est défini par la revendication 1. Un procédé de fixation suivant l'invention est défini par la revendication 5.

L'invention a pour objet un module lumineux pour véhicule, comportant une source d'éclairage et un réflecteur, caractérisé en ce qu'il comporte :
- un cadre de support d'une lentille portant des moyens d'accrochage de ladite lentille,
- une lentille portant des moyens de fixation au cadre de support,
- les moyens d'accrochage de la lentille étant disposés sur une partie seulement du pourtour du cadre.

Les moyens de fixation sont agencés pour coopérer avec les moyens d'accrochage.

Avantageusement, le cadre de support de lentille comporte deux faces latérales en vis-à-vis reliant la partie inférieure et la partie supérieure. Les parties inférieure et supérieure comportent chacune une majeure portion s'étendant depuis une extrémité inférieure, respectivement supérieure, de chaque face latérale vers la lentille du module, cette majeure portion supportant l'un, respectivement l'autre, des moyens d'accrochage. Dans cet exemple de réalisation de l'invention, le cadre est ainsi dépourvu de matière s'étendant entre ces majeures portions des parties supérieure et inférieure. Ainsi, aucun élément de ce cadre ne vient border la lentille, de façon à donner à cette lentille un aspect flottant.

De préférence, les moyens d'accrochage sont prévus à l'extrémité située vers la lentille, de chacune des majeures portions. Le bord de chacune des faces latérales, situé vers la lentille, peut présenter un profil concave, renforçant ainsi l'aspect flottant de la lentille.

Selon l'invention, les moyens d'accrochage de la lentille sont constitués, à la partie inférieure du cadre de support par une ouverture, et à la partie supérieure du cadre de support par une nervure d'accrochage.

Les moyens de fixation de la lentille sont constitués, à la partie inférieure de la lentille par un ergot apte à être inséré dans l'ouverture du cadre de support, et à la partie supérieure de la lentille par une languette munie d'une fente apte à coopérer avec la nervure d'accrochage.

Avantageusement, la languette s'étend depuis la lentille vers le cadre de support de la lentille.

De manière avantageuse, l'ergot de la lentille porte un cran de retenue sous la partie inférieure du cadre de support de la lentille.

Avantageusement, la lentille porte, à sa partie inférieure, une nervure d'appui sur la partie inférieure du cadre de support.

Selon l'invention, le module lumineux comporte un support de réflecteur coopérant avec le cadre de support de la lentille pour assurer le maintien en position de la lentille.

Avantageusement, le réflecteur peut faire partie du support de réflecteur.

Le support de réflecteur peut comporter une cavité, par exemple ellipsoïdale, disposée de sorte à recevoir les rayons lumineux émis par la source d'éclairage. Le cas échéant, la surface de cette cavité comporte un revêtement réfléchissant pour former ledit réflecteur, ce réflecteur étant ainsi agencée pour réfléchir ces rayons lumineux vers la lentille.

Avantageusement, l'ensemble formé par la source d'éclairage, le réflecteur et la lentille est agencé pour former un faisceau lumineux dépourvu de coupure, par exemple un faisceau lumineux de type route, feu diurne ou feu de position.

Selon l'invention, le support de réflecteur comporte à sa partie inférieure une butée d'appui sur l'ergot de la lentille, et à sa partie supérieure un couvercle d'appui sur la languette de la lentille.

L'invention a aussi pour objet un projecteur d'éclairage pour véhicule automobile, comportant un bloc radiateur, comportant au moins deux modules lumineux tels que décrits ci-dessus, le support de réflecteur de chacun des modules étant fixé sur le bloc radiateur.

L'invention a encore pour objet un procédé de fixation d'une lentille sur un cadre de support de lentille dans un module lumineux pour véhicule comportant une lentille, un cadre de support de lentille et un support de réflecteur, comportant les étapes de :
- insérer dans une ouverture de la partie inférieure du cadre de support, un ergot porté par la partie inférieure de la lentille, et portant un cran de retenue sous la partie inférieure du cadre de support de lentille,
- faire pivoter la lentille par rapport à l'ouverture de la partie inférieure du cadre de support de lentille jusqu'à ce que, d'une part, une languette à la partie supérieure de la lentille s'encliquète sur une nervure d'accrochage de la partie supérieure du cadre de support de lentille, et d'autre part, une nervure de la partie inférieure de la lentille soit en appui sur la partie inférieure du cadre de support de lentille,
- faire glisser le support de réflecteur sur le cadre de support de lentille jusqu'à ce que, d'une part, une butée de la partie inférieure du support de réflecteur soit en appui sur l'ergot de la lentille, et d'autre part, le couvercle du support de réflecteur recouvre la languette de la partie supérieure de la lentille.

D'autres caractéristiques et avantages de l'invention ressortent de la description qui suit faite avec référence aux dessins annexés dans lesquels :

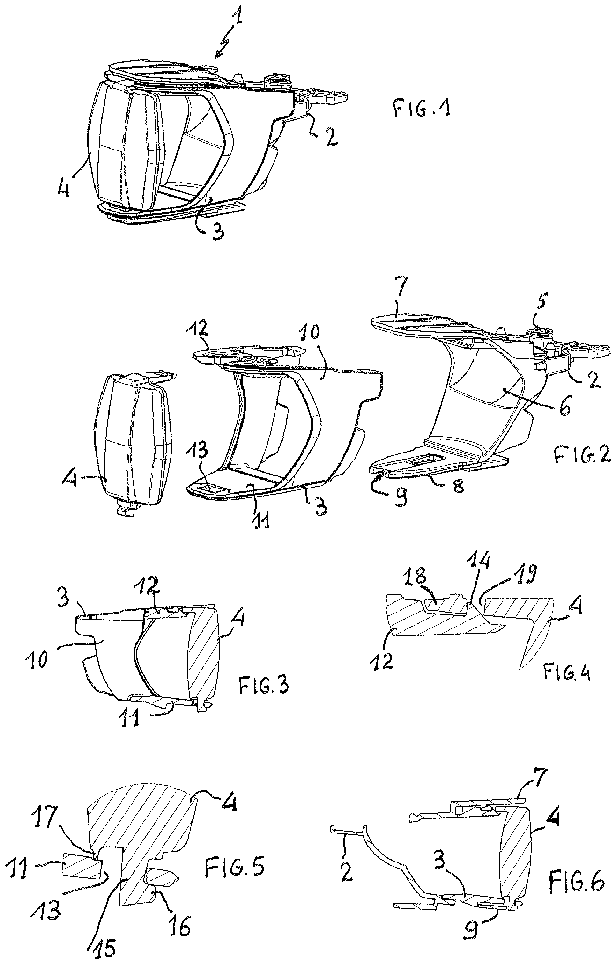

- la figure 1 est une vue en perspective d'un module lumineux pour véhicule selon un mode de réalisation de l'invention.
- la figure 2 est une vue éclatée du module lumineux de la figure 1.
- la figure 3 est une vue en coupe selon le plan vertical médian, de la lentille et de son cadre de support en position de fonctionnement.
- la figure 4 est une vue de détail de la liaison entre la lentille et son cadre de support, à leur partie supérieure.
- la figure 5 est une vue de détail de la liaison entre la lentille et son cadre de support, à leur partie inférieure.
- la figure 6 est une vue en coupe, simplifiée, montrant le rôle du support de réflecteur dans le maintien en position de la lentille.

Le module 1 lumineux pour véhicule se compose essentiellement de trois parties : un support 2 de réflecteur, un cadre 3 de support de lentille et une lentille 4.

Le support 2 de réflecteur, généralement fixé à un bloc radiateur (non représenté), comporte une douille 5 de mise en place de la LED, un réflecteur 6, un couvercle 7 et une partie inférieure 8 présentant une butée 9.

Le cadre 3 de support de lentille comporte deux faces latérales 10 reliant une partie inférieure 11 et une partie supérieure 12. La partie inférieure 11 porte au voisinage de son bord extérieur une ouverture 13 sensiblement rectangulaire. La partie supérieure 12 porte, au voisinage de son bord, dans sa partie sensiblement médiane, une nervure d'accrochage 14.

La lentille 4 porte à sa partie inférieure un ergot 15 de section sensiblement rectangulaire, présentant, à son extrémité inférieure, un cran 16 dirigé vers l'extérieur du module 1. A sa partie inférieure, la lentille 4 porte aussi une nervure 17, décalée vers l'intérieur du module 1 par rapport à l'ergot 15. Lorsque la lentille 4 est en position dans le cadre 3 de support de lentille, le cran 16 porté par l'ergot 15 est en appui sous la partie inférieure 11 du cadre 3 et la nervure 17 est en appui sur la partie inférieure 11 du cadre 3.

La lentille 4 porte à sa partie supérieure une languette 18, dirigée vers le module 1 s'étendant depuis la lentille 4 vers le cadre 3 de support de lentille, et munie d'une fente 19 apte à coopérer avec la nervure d'accrochage 14 du cadre 3 de support de lentille.

Pour sa mise en place sur le cadre 3 de support de lentille, la lentille 4 est présentée inclinée vers l'extérieur du cadre 3. L'ergot 15 est inséré dans l'ouverture 13 du cadre 3. La lentille 4 est redressée par pivotement par rapport à l'ouverture 13, le cran 16 de l'ergot 15 restant en prise sous la partie inférieure 11 du cadre 3. Le bord extérieur de la languette 18, portée par la lentille 4 à sa partie supérieure, arrive au contact de la nervure d'accrochage 14. Le mouvement de pivotement de la lentille 4 est poursuivi et, par déformation élastique, la languette 18 s'élève au-dessus de la nervure d'accrochage 14, jusqu'à ce que la fente 19 de la languette 18 se présente en regard de la nervure d'accrochage 14. La languette 18 reprend sa position initiale par rapport à la lentille 4. La fixation de la lentille 4 sur le cadre 3 de support de lentille a été réalisée, à la partie supérieure de la lentille 4, par encliquetage. Simultanément, à la partie inférieure de la lentille 4, la nervure 17 est venue en appui sur la partie inférieure du cadre 3, et le cran 16 de l'ergot 15 est resté en appui sous la partie inférieure du cadre 3.

La grande face de l'ergot 15, dont la section est rectangulaire, est en appui sur un grand côté de l'ouverture 13 de la partie inférieure du cadre 3 de support de lentille. La lentille 4 a donc une orientation déterminée par rapport à l'axe longitudinal X du module. Le cran 16 de l'ergot 15 est en appui sous la partie inférieure 11 du cadre 3 et la nervure 17 est en appui sur la partie inférieure du cadre 3. La lentille 4 a donc une position fixe selon l'axe vertical Z. La languette 18 de la partie supérieure de la lentille 4 est encliquetée sur la nervure d'accrochage 14 de la partie supérieure du cadre 3. La lentille 4 a donc une position fixe par rapport à l'axe Y de sa rotation, qui est perpendiculaire au plan formé par les deux axes X et Z. La lentille a donc une position définitive référencée par rapport aux trois axes X, Y et Z, ce qui correspond à un isostatisme.

Au cours de la phase de montage du cadre 3 de support de la lentille 4 dans le support 2 de réflecteur, d'une part la butée 9 de la partie inférieure du support 2 de réflecteur vient en appui contre l'ergot 15 de la lentille 4, d'autre part le couvercle 7 de la partie supérieure du support 2 de réflecteur vient recouvrir la languette 18 de la lentille 4, de sorte que la lentille 4 est maintenue en position stable.

L'ensemble du module 1 lumineux est fixé au bloc radiateur du projecteur d'éclairage par l'intermédiaire du seul support 2 de réflecteur. Le projecteur d'éclairage peut comprendre plusieurs modules juxtaposés fixés sur le bloc radiateur, avantageusement au moins deux modules, et de préférence trois modules.

Ainsi, la fixation de la lentille sur un module lumineux à LED est assurée par encliquetage et en l'absence de vis, et la position de la lentille par rapport au module est référencée.

## Revendications

1. Module lumineux pour véhicule, comportant une source d'éclairage et un réflecteur, et comportant :
- un cadre (3) de support d'une lentille (4) portant des moyens d'accrochage de ladite lentille,
- une lentille (4) portant des moyens de fixation au cadre (3) de support, les moyens d'accrochage étant disposés sur une partie seulement du pourtour du cadre,
dans lequel les moyens d'accrochage de la lentille (4) sont constitués, à la partie inférieure du cadre (3) de support par une ouverture (13), et à la partie supérieure du cadre (3) de support par une nervure (14) d'accrochage,
dans lequel les moyens de fixation de la lentille (4) sont constitués, à la partie inférieure de la lentille par un ergot (15) apte à être inséré dans l'ouverture (13) du cadre (3) de support, et à la partie supérieure de la lentille par une languette (18) munie d'une fente (19) apte à coopérer avec la nervure (14) d'accrochage,
et dans lequel le module lumineux comporte un support (2) de réflecteur (6) coopérant avec le cadre (3) de support de la lentille (4) pour assurer le maintien en position de la lentille, le support (2) de réflecteur comportant à sa partie inférieure une butée (9) d'appui sur l'ergot (15) de la lentille (4), et à sa partie supérieure un couvercle (7) d'appui sur la languette (18) de la lentille (4).

2. Module lumineux selon la revendication 1 **caractérisé en ce que** l'ergot (15) de la lentille (4) porte un cran (16) de retenue sous la partie inférieure du cadre (3) de support de la lentille.

3. Module lumineux selon la revendication 1 **caractérisé en ce que** la lentille (4) porte, à sa partie inférieure, une nervure (17) d'appui sur la partie inférieure du cadre (3) de support.

4. Projecteur d'éclairage pour véhicule automobile, comportant un bloc radiateur, **caractérisé en ce qu'**il comporte au moins deux modules (1) lumineux selon l'une des revendications 1 à 3, le support (2) de réflecteur de chacun des modules (1) étant fixé sur le bloc radiateur.

5. Procédé de fixation d'une lentille sur un cadre de support de lentille dans un module (1) lumineux pour véhicule comportant une lentille (4), un cadre (3) de support de lentille et un support (2) de réflecteur, comportant les étapes de :
- insérer dans une ouverture (13) de la partie inférieure du cadre (3) de support, un ergot (15) porté par la partie inférieure de la lentille (4), et portant un cran (16) de retenue sous la partie inférieure du cadre (3) de support de lentille,
- faire pivoter la lentille (4) par rapport à l'ouverture (13) de la partie inférieure du cadre (3) de support de lentille jusqu'à ce que, d'une part, une languette (18) à la partie supérieure de la lentille (4) s'encliquète sur une nervure (14) d'accrochage de la partie supérieure du cadre (3) de support de lentille, et d'autre part, une nervure (17) de la partie inférieure de la lentille (4) soit en appui sur la partie inférieure du cadre (3) de support de lentille,
- faire glisser le support (2) de réflecteur sur le cadre (3) de support de lentille jusqu'à ce que, d'une part, une butée (9) de la partie inférieure du support (2) de réflecteur soit en appui sur l'ergot (15) de la lentille (4), et d'autre part, le couvercle (7) du support (2) de réflecteur recouvre la languette (18) de la partie supérieure de la lentille (4).

## Patentansprüche

1. Leuchtmodul für ein Fahrzeug, das eine Beleuchtungsquelle und einen Reflektor umfasst, und umfassend:
- einen Rahmen (3) zum Tragen einer Linse (4), der über Mittel zum Einhaken der Linse verfügt,
- eine Linse (4), die über Mittel zum Befestigen an dem Tragrahmen (3) verfügt, wobei die Mittel zum Einhaken nur an einem Teil des Umfangs des Rahmens angeordnet sind,
wobei die Mittel zum Einhaken der Linse (4) im unteren Teil des Tragrahmens (3) aus einer Öffnung (13) und im oberen Teil des Tragrahmens (3) aus einer Rippe (14) zum Einhaken bestehen,
wobei die Mittel zum Befestigen der Linse (4) im unteren Teil der Linse aus einem Zapfen (15), der dazu fähig ist, in die Öffnung (13) des Tragrahmens (3) eingeführt zu werden, und im oberen Teil der Linse aus einer Zunge (18) mit einem Schlitz (19), die dazu fähig ist, mit der Rippe (14) zum Einhaken zusammenzuwirken, bestehen
und wobei das Leuchtmodul einen Träger (2) für einen Reflektor (6) umfasst, der mit dem Tragrahmen (3) der Linse (4) zusammenwirkt, um das Halten der Linse in Position zu gewährleisten, wobei der Reflektorträger (2) in seinem unteren Teil einen Anschlag (9) zur Anlage an dem Zapfen (15) der Linse (4) und in seinem oberen Teil eine Abdeckung (7) zur Anlage an der Zunge (18) der Linse (4) umfasst.

2. Leuchtmodul nach Anspruch 1, **dadurch gekennzeichnet, dass** der Zapfen (15) der Linse (4) über eine Raste (16) zum Festhalten unter dem unteren Teil des Tragrahmens (3) der Linse verfügt.

3. Leuchtmodul nach Anspruch 1, **dadurch gekennzeichnet, dass** die Linse (4) in ihrem unteren Teil über eine Rippe (17) zur Anlage an dem unteren Teil des Tragrahmens (3) verfügt.

4. Scheinwerfer für ein Kraftfahrzeug, der einen Radiatorblock umfasst, **dadurch gekennzeichnet, dass** er mindestens zwei Leuchtmodule (1) nach einem der Ansprüche 1 bis 3 umfasst, wobei der Reflektorträger (2) von jedem der Module (1) an dem Radiatorblock befestigt ist.

5. Verfahren zur Befestigung einer Linse an einem Linsentragrahmen in einem Leuchtmodul (1) für ein Fahrzeug, das eine Linse (4), einen Linsentragrahmen (3) und einen Reflektorträger (2) umfasst, umfassend die folgenden Schritte:
- Einführen, in eine Öffnung (13) des unteren Teils des Tragrahmens (3), eines Zapfens (15), der durch den unteren Teil der Linse (4) getragen wird und über eine Raste (16) zum Festhalten unter dem unteren Teil des Linsentragrahmens (3) verfügt,
- Schwenken der Linse (4) mit Bezug auf die Öffnung (13) des unteren Teils des Linsentragrahmens (3), bis einerseits eine Zunge (18) im oberen Teil der Linse (4) in eine Einhakrippe (14) des oberen Teils des Linsentragrahmens (3) einrastet und andererseits eine Rippe (17) des unteren Teils der Linse (4) an dem unteren Teil des Linsentragrahmens (3) anliegt,
- Ziehen des Reflektorträgers (2) über den Linsentragrahmen (3), bis einerseits ein Anschlag (9) des unteren Teils des Reflektorträgers (2) an dem Zapfen (15) der Linse (4) anliegt und andererseits die Abdeckung (7) des Reflektorträgers (2) die Zunge (18) des oberen Teils der Linse (4) abdeckt.

## Claims

1. Light module for a vehicle, comprising a lighting source and a reflector, and comprising:
- a support frame (3) for supporting a lens (4) which bears attachment means for attachment of said lens,
- a lens (4) bearing fastening means for fastening to the support frame (3), the attachment means being disposed on only a part of the periphery of the frame,
wherein the attachment means for the lens (4) are formed, on the lower part of the support frame (3), by an opening (13), and, on the upper part of the support frame (3), by an attachment rib (14),
wherein the fastening means of the lens (4) are formed, on the lower part of the lens, by a lug (15) that is able to be inserted into the opening (13) in the support frame (3), and, on the upper part of the lens, by a tab (18) provided with a slot (19) that is able to cooperate with the attachment rib (14),
and wherein the light module comprises a support (2) for the reflector (6) that cooperates with the support frame (3) for the lens (4) so as to hold the lens in position, the reflector support (2) comprising, on its lower part, a stop (9) bearing against the lug (15) of the lens (4), and, on its upper part, a cover (7) bearing against the tab (18) of the lens (4) .

2. Light module according to Claim 1, **characterized in that** the lug (15) of the lens (4) bears a retaining catch (16) below the lower part of the lens support frame (3).

3. Light module according to Claim 1, **characterized in that** the lens (4) bears, on its lower part, a rib (17) bearing against the lower part of the support frame (3).

4. Lighting headlamp for a motor vehicle, comprising a radiator unit, **characterized in that** it comprises at least two light modules (1) according to one of Claims 1 to 3, the reflector support (2) of each of the modules (1) being fastened to the radiator unit.

5. Fastening method for fastening a lens to a lens support frame in a vehicle light module (1) comprising a lens (4), a lens support frame (3) and a reflector support (2), comprising the steps of:
- inserting a lug (15) which is borne by the lower part of the lens (4) and which bears a retaining catch (16) below the lower part of the lens support frame (3) into an opening (13) in the lower part of the lens support frame (3),
- pivoting the lens (4) with respect to the opening (13) in the lower part of the lens support frame (3) until, for the one part, a tab (18) on the upper part of the lens (4) snap-fits on an attachment rib (14) of the upper part of the lens support frame (3), and, for the other part, a rib (17) of the lower part of the lens (4) bears against the lower part of the lens support frame (3),
- sliding the reflector support (2) onto the lens support frame (3) until, for the one part, a stop (9) of the lower part of the reflector support (2) bears against the lug (15) of the lens (4), and, for the other part, the cover (7) of the reflector support (2) covers the tab (18) of the upper part of the lens (4).
